# EUROPEAN PATENT SPECIFICATION

(11) **EP 3 115 597 B1**
(45) Date of publication and mention of the grant of the patent: **18.07.2018**
(21) Application number: 14884326.1
(22) Date of filing: 04.03.2014
(51) Int. Cl.: F03D 13/00, F03D 9/00, F16C 19/54, F03D 1/06

(54) **WIND TURBINE DRIVE TRAIN**
ANTRIEBSSTRANG FÜR WINDTURBINE
TRAIN DE TRANSMISSION D'UNE ÉOLIENNE

(43) Date of publication of application: 11.01.2017
(73) Proprietor: Nabrawind SL, 31002 Pamplona (ES)
(72) Inventor: SANZ PASCUAL, Eneko, 31002 Pamplona (Navarra) (ES); SAVII COSTA, Hely Ricardo, 31133 Uterga (Navarra) (ES)
(74) Representative: Igartua, Ismael
(86) International application number: PCT/ES2014/000037
(87) International publication number: WO 2015/132420

(56) References cited:
- EP-A1- 2 397 690
- WO-A2-2011/058184
- CN-U- 203 098 150
- US-A1- 2009 250 939
- US-A1- 2009 250 939
- US-A1- 2011 140 439
- US-A1- 2011 248 506
- HOU ZHE ET AL.: 'Review and design study of drive train for MW class direct drive wind turbine.Innovative Smart Grid Technologies' ASIA (ISGT ASIA), 2012 IEEE , 20120521 IEEE 21 May 2012, pages 1 - 4, XP032237408

## Description

### TECHNICAL FIELD

The present invention is comprised in the field of wind turbines, and more specifically, in the field of drive train having a directly coupled generator arranged inside the nacelle and attached through its corresponding transmission system to the wind rotor arranged outside the nacelle.

### PRIOR ART

Drive trains without a step-up gear, i.e. those having the generator coupled directly to the rotor, are well known today. M Torres and Jeumount designs are added to ENERCON E-30, E-40, etc. machines. Currently, Siemens, Areva, Alstom, Vestas, Ming Yang, Goldwin or IMPSA are developing configurations of this type. It can therefore be concluded that the configuration of a generator coupled directly to the rotor, also including a generator frequency converter for decoupling said generator from the grid, is well known in the prior art.

The function of the mainframe of a nacelle is in any case to support the drive train and to transmit loads not derived from the rotor torque to the tower through the rotation ring (Yaw). Most manufacturers follow the same fundamental principles in designing said mainframe, with ductile cast steel being the most widespread today. To understand the different mainframes it is necessary to analyze different drive train configurations including specific features such as in patent ES 2277795, belonging to Gamesa, and EP 2 397 690 where the rotor and generator are arranged on both sides of the tower. The main shaft is coupled to the hub and the rotor of the generator, and the mentioned shaft is furthermore supported between bearings arranged on both sides of the tower.

US 20050230979, belonging to Northern Power Systems, discloses a directly coupled generator and a rotor, both being located on the same side of the tower. Furthermore, the brake is integrated in the generator stator and the transformer is below the nacelle, inside the tower.

In fact, in 2005, NREL together with Northern Power Systems, in the "WindPACT Drive Train Alternative Design Study Report", analyzed several drive train configurations according to the position of the generator with respect to the tower and the rotation ring, and with respect to the resulting frame solution. Nevertheless, in all of them the tower and therefore rotation ring diameter is reduced and limits the advantages of embedding the generator in the rotation ring itself.

Finally, US 2009250939, belonging to TianDi Growth Capital, discloses a drive train on a 5 to 10 m platform which at the same time is the rotation system of the nacelle and the mainframe itself. The rotor feeds at least 9 generators. The bearings are separated from one another by 10 m, and in between the rotating shaft there are different sets of pinion gears moving the generators. According to its claim 1, the drive train is characterized in that the generators moving the main shaft rotate below the line of the rotation system.

Of all these configurations, the latter can be considered the closest prior art. However, there are many problems with this configuration: the huge main shaft dimensions with respect to the two sole rolling supports existing in the narrow ring supporting it, the considerable weight of the multiple generator (it feeds at least 9 generators) and therefore the resulting frame complexity to prevent excessive bending of the bi-supported main shaft and to house both the central wheel and all subsequent generators.

The drive train object of the invention solves this and other problems derived from the direct connection between the main shaft and the generator without intermediate gears. The type of structure of the mainframe of the drive train, based on ribs compared with complex cast pieces, simplifies both the design and the manufacture thereof and allows making it modular to reduce transport costs, furthermore taking advantage of the large reaction arm of a large diameter rotation ring. It furthermore allows efficiently solving the position of the generator inside the rotation ring, reducing the height of the main shaft with respect to said ring, and therefore reducing the loads thereof.

As regards the rotation system (yaw), all manufacturers use continuous bearings (roller bearings or slide bearing), with a driving system based on gears and electric motors. However, US 2009250939 proposes a continuous rolling raceway but discrete supports, as in the new invention. The main difference between them is the design of both the rolling raceway and of said discrete supports, which are thought to support associated loads in all directions.

### DISCLOSURE OF THE INVENTION

One object of the invention is to provide the most compact drive train and nacelle configuration possible for a large diameter tower, taking into account aspects relating to component accessibility and maintenance. With current sizes of multi-megawatt wind turbines, arranging the transmission system at the top of the tower conditions the structural design of the support of the drive train.

Another object of the invention is to provide the rotor with an attachment to a mainframe or fixed support which is attached through the rotation system (yaw) to a connection system formed by a connection piece connected to the tower. Said mainframe has a hollow shaft anchored at one of its ends where the main bearing supporting the rotor is arranged and from where the main shaft extends.

Another object of the invention is that the support of the main shaft supported on the aforementioned support and on two other supports which, together with the triangular mainframe containing them, also holds the generator and the brake. The supports of the generator are part of the mainframe generated with ribs having flanges and webs, and include the respective bearings, one on each side of the set forming the generator and the brake.

Another object of the invention is the generator to be integrated in said mainframe and that at the same time it partially passes through the connection piece itself arranged on the tower.

Finally, another object of the invention is to provide the drive train object of the invention with a novel rotation system (yaw) with a set of rolling members sliding on a ring arranged on the annular connection piece supported on the tower. Furthermore, drive members activating rotation of the nacelle about the tower without requiring the usual rack and pinion gearing will be arranged. The motors used by the drive members are electric motors, and they activate a series of pneumatic wheels rolling on the rolling raceway formed by the rotation ring. In the case of downwind turbines, where the rotation system (yaw) can be passive and may not require a driving system, the drive members could be eliminated and only the rolling members allowing rotation and transmitting loads would remain.

The following advantages can be deduced from the foregoing:
A large diameter rotation ring (yaw) is associated with the advantage of greatly reducing vertical loads resulting in the discrete supports thereof. However, as regards the mainframe, the distance between supports and therefore the bending loads have also increased. As a result, the triangular configuration of the mainframe takes advantage of the reaction arm and minimizes loads on the supports, in the most compact way possible. In addition, the proposed mainframe based on ribs provides the necessary flexural rigidity to the structure in an efficient manner. To that end, these ribs are formed by a flange and a web with windows or relief members. This structure furthermore allows making the design modular for the purpose of reducing transport costs and of suitably housing all the members of the drive train: bearings, brake and generator.

Additionally, the proposed structure allows embedding the generator in the central opening of the rotation ring (yaw) and of the connection piece, and therefore reducing the distance between the shaft of the rotor and the rotating plane (yaw), with the subsequent load reduction this entails.

Finally, the design of the rolling raceway and supports of the rotation system (yaw) allows drastically reducing the number of rolling members, therefore reducing the cost of the assembly.

### DESCRIPTION OF THE DRAWINGS

A set of drawings which help to better understand the invention and are expressly related to an embodiment of said invention presented as a non-limiting example thereof is very briefly described below.
Figure 1 is a general view of the wind turbine of the invention.
Figure 2 is a detail of part of the rotor, drive train and connection piece with the lattice tower.
Figure 3 is the same view as in Figure 2 but in this case it is a profile view with some parts being sectioned.
Figure 4 is a perspective view of the mainframe or fixed support with the hollow shaft.
Figure 5 is an enlarged view of the attachment of the mainframe and connection piece through the rotation system (yaw). A detail of the yaw system is added.
Figure 6 is a second practical embodiment with a different rolling ring.
Figures 7 and the variants a, b, and c, are different embodiments of the driving system according to the embodiments of one rolling ring or another.

### DETAILED DISCLOSURE OF THE INVENTION

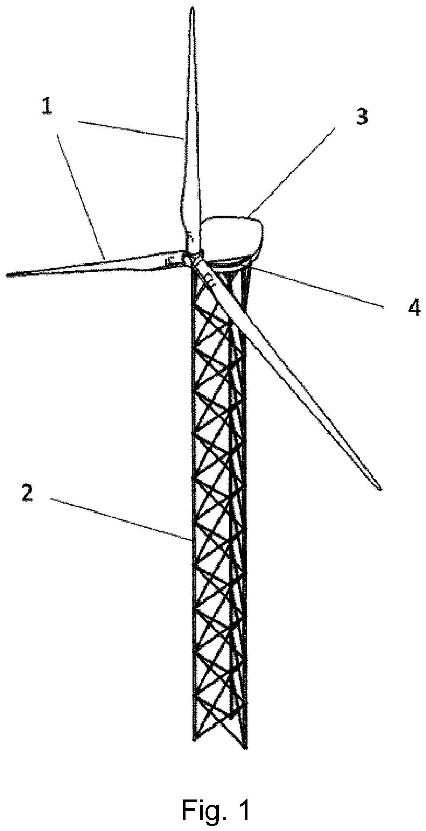

The wind turbine shown in Figure 1 is a horizontal shaft wind turbine, with three blades (1) facing downwind and a lattice tower (2) the three legs of which are equally spaced from one another along the entire length thereof. The connection piece (4) is arranged between the nacelle (3) and the tower (2), and the drive train object of the invention (not shown in the drawing) is arranged on said connection piece (4).

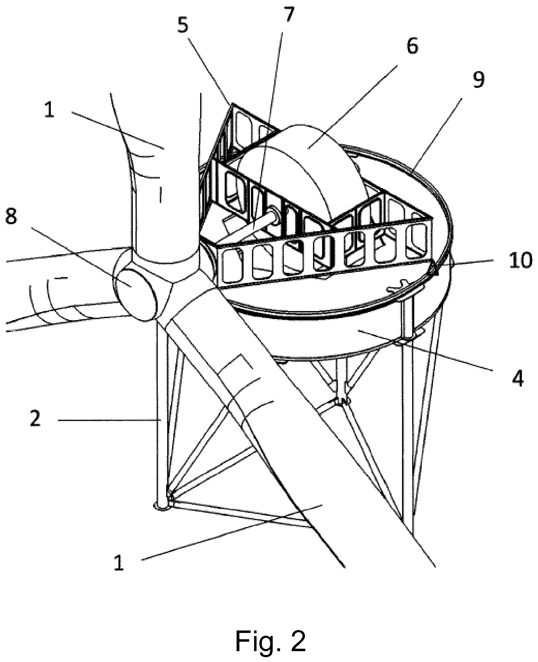

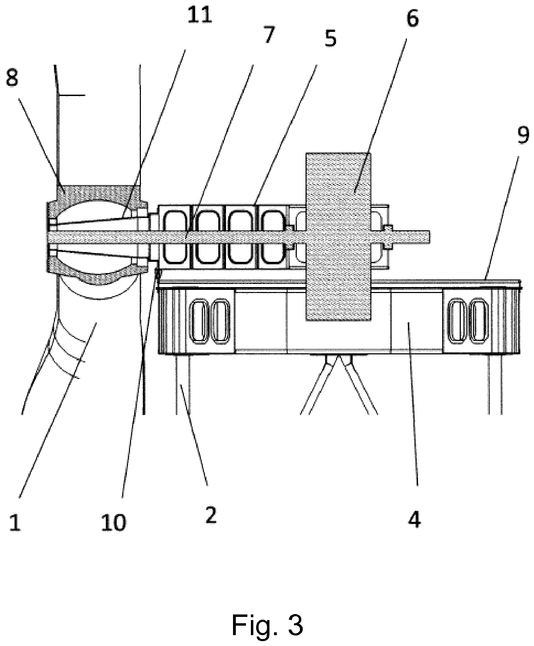

As shown in Figures 2 and 3, the lattice tower (2) supports the connection piece (4), and the triangular mainframe (5) internally housing the generator (6) and the main shaft (7) and supporting the rotor (8) at one of its ends is arranged thereon. A rolling ring or raceway (9) that is part of the rotation system (yaw) is arranged in the top of the connection piece (4). Said rotation system is made up of the mentioned ring (9) and the three supports (10), each one of said supports (10) being arranged in each vertex of the triangle forming the mainframe (5). The main shaft (7) passes through one of the vertexes of the mainframe (5) in the spot where a hollow shaft (11) having a main bearing making it easier to rotate the rotor (8) is anchored.

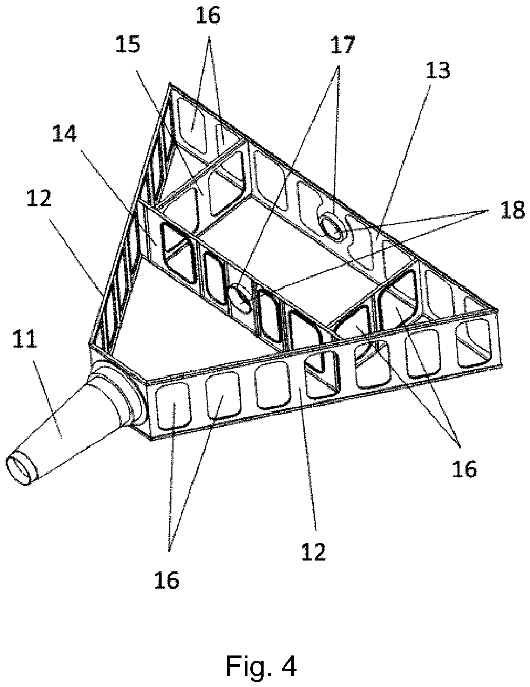

In Figure 4, the triangular mainframe (5) is formed with outer ribs and inner ribs. The outer ribs are made up of side ribs (12) and the bottom rib (13). The inner ribs in turn are made up of the support rib (14) and the reinforcement rib (15), both defining the opening where the generator will be housed. All the ribs have relief windows (16) distributed uniformly on the entire surface. The supports (17) of the generator (6) are part of the ribs of the mainframe (5) and include respective bearings (18), one on each side of the set forming the generator and brake (not shown in the drawing).

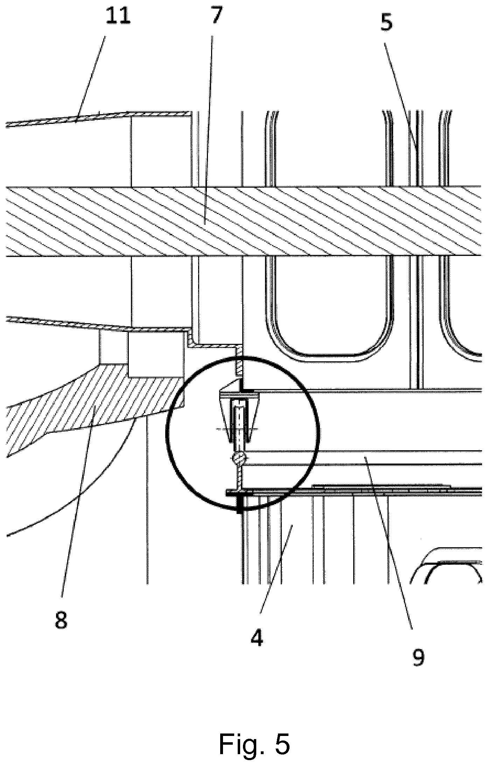

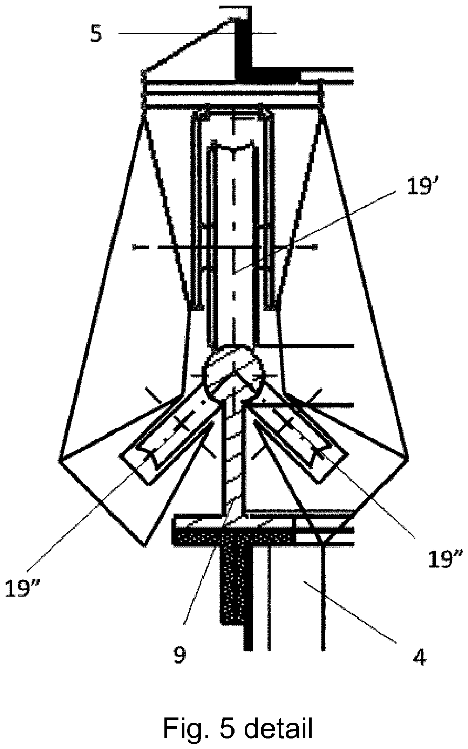

As shown in Figure 5 the mainframe (5) is supported on the connection piece (4) through the rolling system made up of a rolling ring (9) and the corresponding supports (10). In a practical embodiment, the rolling ring (9) has an inverted T shape at the base and a circular shape in the top. The enlarged detail shows three rolling members (19) rolling on the rolling ring (9), said rolling members acting on 120° from one another and supporting horizontal and vertical loads in both directions derived from the rotation of the wind turbine on the tower.

The upper rolling member (19') transmits vertical compressive loads to the tower. The two inclined rolling members (19") can support both vertical and horizontal tensile loads due to their angle.

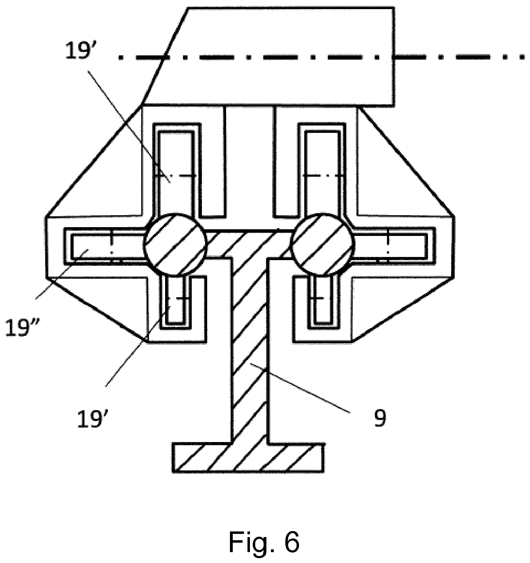

Figure 6 is another practical embodiment where the rolling ring (9) is double T-shaped and the top is complemented with two circular shapes and three rolling members (19) in each flange of the T, arranged symmetrically with respect to the ring (9) and separated 90° from one another. This arrangement means that the vertical rolling members (19') transmit only vertical loads and the horizontal members (19") transmit only horizontal loads.

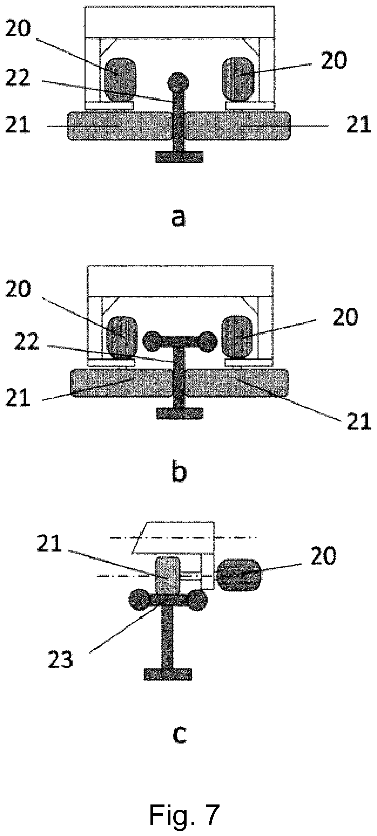

Figure 7 shows driving systems of the rolling members according to if one rolling ring (9) or another is selected. In this case, the rotation system does not support loads but rather causes rotation driven by the drive members, preferably electric motors (20), located above the wheels (21). Said pneumatic wheels drive in the central part (22) of the rolling ring (9), as shown in embodiments a and b, or the wheels (21) drive in the top (23) of the rolling ring (9), as shown in embodiment c. The driving systems are part of the rolling system made up of the supports (10).

## Claims

1. Wind turbine drive train of the type comprising a generator (6), inside the nacelle (3), coupled directly to a rotor (8), outside the nacelle (3), which is supported on a hollow shaft (11) through which a main shaft (7) connecting the rotor, the generator and the brake by means of the corresponding bearings (18) passes, **characterized in that**
- the main shaft (7) is supported on the hollow shaft (11) and on two supports (17) at both sides of the generator (6),
- the generator (6) is arranged such that its lower part passes through both the rotation ring (9) and the connection piece (4) which rests on the tower (2),
- a mainframe (5) that supports the entire drive train is passed through by the main shaft (7), said mainframe (5) being formed by a group of ribs forming a triangle and being attached through the rotation ring (9) to a connection piece (4) by means of at least two supports (10) arranged at the vertexes of the mainframe (5), and
- a rotation system (9) moves the mainframe (5) on the connection piece (4) through the rotation ring (9) and the rolling members (19) existing in the supports (10), with the force supplied by the drive members which are also attached to the supports (10).

2. Wind turbine drive train according to claim 1, wherein the mainframe (5) is triangular-shaped and is made up of inner and outer ribs, the outer ribs being grouped together as side ribs (12) and bottom ribs (13) and the inner ribs being grouped together as support ribs (14) and reinforcement ribs (15), all the ribs having relief windows (16) and being formed by their corresponding flanges and webs, and the hollow shaft (11) being supported in one of the vertexes of the mainframe (5).

3. Wind turbine drive train according to claim 2, wherein in addition to the vertexes, the mainframe (5) has two other supports (17) in the bottom rib (13) and in the support rib (14), and each of the supports (17) has its corresponding bearings (18) to allow the rotation of the main shaft (7).

4. Wind turbine drive train according to the preceding claims, wherein the annular ring (9) has an inverted T shape with one or two circular sections in the top through which the rolling members (19) roll.

5. Wind turbine drive train according to claim 4, wherein the rolling members (19) are three in number and are arranged at 120° or 90° according to whether the annular ring (9) has one or two circular sections in the top.

6. Wind turbine drive train according to the preceding claims, wherein the drive members are a combination of electric motors (20) and pneumatic wheels (21) rolling on the annular ring (9) in either the central part (22) or the top (23) thereof.

7. Wind turbine drive train according to the preceding claims, wherein the wind turbine is a downwind turbine.

## Patentansprüche

1. Windturbinenantriebsstrang der Art, die einen Generator (6) innerhalb der Gondel (3) umfasst, der direkt mit einem Rotor (8) außerhalb der Gondel (3) gekoppelt ist, der auf einer Hohlwelle (11) getragen ist, durch die hindurch eine Hauptwelle (7) verläuft, die den Rotor, den Generator und die Bremse mittels der entsprechenden Lager (18) verbindet, **dadurch gekennzeichnet, dass**
- die Hauptwelle (7) auf der Hohlwelle (11) und auf zwei Stützen (17) auf beiden Seiten des Generators (6) getragen ist,
- der Generator (6) derart angeordnet ist, dass sein unterer Teil sowohl durch den Drehring (9) als auch das Verbindungsstück (4) hindurch verläuft, das auf dem Turm (2) ruht,
- ein Hauptrahmen (5), der den gesamten Antriebsstrang trägt, von der Hauptwelle (7) durchlaufen wird, wobei der Hauptrahmen (5) durch eine Gruppe von Rippen gebildet ist, die ein Dreieck bilden und durch den Drehring (9) an einem Verbindungsstück (4) mittels mindestens zwei Stützen (10) befestigt sind, die an den Scheitelpunkten des Hauptrahmens (5) angeordnet sind, und
- ein Drehsystem (9) den Hauptrahmen (5) auf dem Verbindungsstück (4) durch den Drehring (9) und die Rollelemente (19) bewegt, die in den Stützen (10) vorhanden sind, mit der Kraft, die von den Antriebselementen geliefert wird, die auch an den Trägern (10) befestigt sind.

2. Windturbinenantriebsstrang nach Anspruch 1, wobei der Hauptrahmen (5) dreieckförmig ist und aus inneren und äußeren Rippen besteht, wobei die äußeren Rippen als Seitenrippen (12) und Bodenrippen (13) zusammengruppiert sind und die inneren Rippen als Stützrippen (14) und Verstärkungsrippen (15) zusammengruppiert sind, wobei alle Rippen Entlastungsfenster (16) aufweisen und durch ihre entsprechenden Flansche und Stege gebildet sind und die Hohlwelle (11) in einem der Scheitelpunkte des Hauptrahmens (5) getragen ist.

3. Windturbinenantriebsstrang nach Anspruch 2, wobei der Hauptrahmen (5) zusätzlich zu den Scheitelpunkten zwei weitere Stützen (17) in der Bodenrippe (13) und in der Stützrippe (14) aufweist und jede der Stützen (17) ihre entsprechenden Lager (18) aufweist, um die Drehung der Hauptwelle (7) zu ermöglichen.

4. Windturbinenantriebsstrang nach den vorhergehenden Ansprüchen, wobei der ringförmige Ring (9) eine umgekehrte T-Form mit einem oder zwei kreisförmigen Abschnitten in der Oberseite aufweist, durch die die Rollelemente (19) rollen.

5. Windturbinenantriebsstrang nach Anspruch 4, wobei die Rollelemente (19) drei an der Zahl sind und unter 120 ° oder 90 ° angeordnet sind, je nachdem, ob der ringförmige Ring (9) einen oder zwei kreisförmige Abschnitte in der Oberseite aufweist.

6. Windturbinenantriebsstrang nach den vorhergehenden Ansprüchen, wobei die Antriebselemente eine Kombination von Elektromotoren (20) und pneumatischen Rädern (21) sind, die auf dem ringförmigen Ring (9) entweder im mittleren Teil (22) oder im oberen Teil (23) davon rollen.

7. Windturbinenantriebsstrang nach den vorhergehenden Ansprüchen, wobei die Windturbine eine Leeläufer-Turbine ist.

## Revendications

1. Chaîne dynamique d'éolienne du type comportant un générateur (6), à l'intérieur de la nacelle (3), accouplé directement à un rotor (8), à l'extérieur de la nacelle (3), qui est supporté par un arbre creux (11) traversé par un arbre principal (7) reliant le rotor, le générateur et le frein au moyen des paliers (18) correspondants, **caractérisé en ce que**
- l'arbre principal (7) est supporté par l'arbre creux (11) et par deux supports (17) des deux côtés du générateur (6),
- le générateur (6) est agencé de sorte que sa partie inférieure traverse à la fois la bague de rotation (9) et la pièce de raccordement (4) qui repose sur la tour (2),
- un châssis principal (5) qui supporte l'ensemble de la chaîne dynamique est traversé par l'arbre principal (7), ledit châssis principal (5) étant formé par un groupe de nervures formant un triangle et fixé par le biais de la bague de rotation (9) à une pièce de raccordement (4) au moyen d'au moins deux supports (10) agencés aux sommets du châssis principal (5), et
- un système de rotation (9) déplace le châssis principal (5) sur la pièce de raccordement (4) par le biais de la bague de rotation (9) et des éléments de roulement (19) existant dans les supports (10), avec la force fournie par les éléments d'entraînement qui sont également fixés aux supports (10).

2. Chaîne dynamique d'éolienne selon la revendication 1, dans laquelle le châssis principal (5) est de forme triangulaire et est constitué de nervures intérieures et extérieures, les nervures extérieures étant regroupées ensemble en tant que nervures latérales (12) et nervures inférieures (13) et les nervures intérieures étant regroupées ensemble en tant que nervures de support (14) et nervures de renfort (15), toutes les nervures ayant des fenêtres en relief (16) et étant formées par leurs brides et âmes correspondantes, et l'arbre creux (11) étant supporté par l'un des sommets du châssis central (5).

3. Chaîne dynamique d'éolienne selon la revendication 2, dans laquelle, en plus des sommets, le châssis principal (5) comporte deux autres supports (17) dans la nervure inférieure (13) et dans la nervure de support (14), et chacun des supports (17) comporte ses paliers (18) correspondants pour permettre la rotation de l'arbre principal (7).

4. Chaîne dynamique d'éolienne selon les revendications précédentes, dans laquelle la bague annulaire (9) a une forme en T inversé avec une ou deux sections circulaires dans la partie supérieure à travers lesquelles les éléments de roulement (19) roulent.

5. Chaîne dynamique d'éolienne selon la revendication 4, dans laquelle les éléments de roulement (19) sont au nombre de trois et sont agencés à 120° ou 90° selon que la bague annulaire (9) comporte une ou deux sections circulaires dans la partie supérieure.

6. Chaîne dynamique d'éolienne selon les revendications précédentes, dans laquelle les éléments d'entraînement sont une combinaison de moteurs électriques (20) et de roues pneumatiques (21) roulant sur la bague annulaire (9) soit dans sa partie centrale (22), soit dans sa partie supérieure (23).

7. Chaîne dynamique d'éolienne selon les revendications précédentes, l'éolienne étant une éolienne sous le vent.
